# EUROPÄISCHE PATENTSCHRIFT

(11) **EP 2 896 823 B1**
(45) Veröffentlichungstag und Bekanntmachung des Hinweises auf die Patenterteilung: **16.05.2018**
(21) Anmeldenummer: 15000598.1
(22) Anmeldetag: 30.01.2013
(51) Int. Cl.: F03D 1/00, E04G 3/24, E04G 3/28, B62D 57/024, F03D 80/00, F03D 17/00, F03D 80/50

(54) **MOBILE WARTUNGSHALLE FÜR KLETTERROBOTER FÜR MASTEN**
MOBILE MAINTENANCE HALL FOR CLIMBING ROBOTS FOR MASTS
HALL DE MAINTENANCE MOBILE POUR ROBOTS GRIMPEURS POUR MÂTS

(30) Priorität: 31.01.2012 DE 102012001725
(43) Veröffentlichungstag der Anmeldung: 22.07.2015
(62) Teilanmeldung aus: 13705098.5
(73) Patentinhaber: Fachhochschule Aachen, 52066 Aachen (DE)
(72) Erfinder: Bagheri, Mohsen, 52072 Aachen (DE)
(74) Vertreter: Cohausz Hannig Borkowski Wißgott

(56) Entgegenhaltungen:
- DE-A1- 10 118 906
- DE-A1-102010 011 365
- DE-U1- 29 819 391
- US-A1- 2012 003 089

## Beschreibung

Die Erfindung betrifft eine mobile Wartungshalle die an einem Kletterroboter für Masten befestigbar ist.

Die Wartungshalle kann in einer möglichen Anwendung eingesetzt werden, um Windkraftanlagen, insbesondere deren Rotorblätter zu warten. Auch hier ist die Anwendung jedoch nicht auf Windkraftanlagen beschränkt. Vielmehr kann jegliche Vorrichtung, insbesondere jegliche von Masten getragene Vorrichtung mittels einer nachfolgend weiter beschriebenen Wartungshalle gewartet werden.

Sofern demnach im Folgenden die Anwendung der Erfindung hinsichtlich Kletterroboter und Wartungshalle am Beispiel einer Windkraftanlage beschrieben wird, ist dies nicht als Einschränkung zu verstehen, sondern nur als mögliches, stellvertretend auch für andere Anwendungsfälle genanntes Beispiel zu sehen.

Windkraftanlagen sind zu einem wichtigen Bestandteil unserer Energieversorgung geworden. Die Windkrafttechnologie unterliegt wie alle anderen Technologien (z.B. Luftfahrt, Raumfahrt oder Automobil etc.) bestimmten Anordnungen hinsichtlich Entwicklung, Produktion, Betrieb und Instandhaltung.

Dabei wird dem sicheren Betrieb und der sicheren Instandhaltung besondere Aufmerksamkeit gewidmet. Hier sind insbesondere die periodischen Inspektionen der Rotorblätter und der Windtürme (Masten) zu nennen. Gleiche oder ähnliche Anforderungen gelten auch für andere Anlagenarten. Um diese Inspektionen ausführen zu können, braucht die Industrie bestimmte Anlagen, die alle Anforderungen von Funktionssicherheit bis Wirtschaftlichkeit der Instandhaltung als Komplettlösung erfüllen können.

Die Anforderung der Wirtschaft und Technologie ist, möglichst viele Arbeitsschritte in einem Arbeitsgang am Ort des Betriebs, kostengünstig, schnell, präzise und sicher zu erledigen. Die dazu notwendigen heutigen Hilfsmittel eignen sich bisher nicht für einen solchen Vor-Ort-Einsatz. Unser Ansatz mit dieser Lösung ist genau diese Anforderungen mit diesem Kletterroboter zu erfüllen.

Die Anforderung der periodischen Inspektion der Rotorblätter begrenzt sich nicht nur darauf, die sichtbaren Schäden zu beheben, sondern auch alle strukturellen Veränderungen wie Risse oder Delamination unter der Oberfläche (Lack) zu erkennen, bewerten und bei Bedarf zu beheben, damit ein sicherer Betrieb bis zur nächsten Inspektion gewährleistet werden kann. Um diesen Anforderungen zu genügen, müssen Arbeitsbedingung geschaffen werden, die den Einsatz geeigneter Prüfungs- und Reparaturmethoden (NDT, ZFP etc.) ermöglichen. Dabei ist wichtig an den Windkraftanlagen eine Arbeitsbedingung zu schaffen, damit viele Arbeitsschritte, die der Zeit in einer Reparaturhalle ausgeführt werden, Vorort zweckdienlich unabhängig der Wetterbedingungen durchgeführt werden können.

Heute kann weder eine zerstörungsfreie Prüfung (ZFP) (None Destructive Testing (NDT)) noch eine Rotorblattreparatur am Windrad vollständig durchgeführt werden. Um aber den Kostendruck der Betreiber von Windkraftanlagen in einem wirtschaftlich effizienten Rahmen zu halten, müssen unbedingt die Ausfallzeiten minimiert werden. Das kann nur mit einer umfassenden Lösung für die Inspektion- und Reparatur an den Windkraftanlagen ermöglicht werden.

Die periodisch geforderte Inspektion von Rotorblättern oder von Windkrafttürmen nach DIN EN 61400-23 (VDE 0127-23) verlangt aber eine lückenlose Untersuchung des Rotors auf weitere Schäden, die möglicherweise produktionsbedingt oder durch dynamische Belastung und häufig durch Betriebsvibration auftreten können. Die ZFP am Rotorblatt erweist sich durchaus schwierig aber wie in der Dissertation von Frau Dr.-Dipl.-Geophys. Anne Jüngert beschrieben, gibt es Möglichkeiten ZFP am Blatt durchführen zu können. Beispiele aus dem Stand der Technik für mobile Wartungshallen sind aus DE29819391U und DE10118906 bekannt. Aufgabe der Erfindung ist eine mobile Wartungshalle bereit zu stellen, um so, insbesondere in Verbindung mit dem erfindungsgemäßen Kletterroboter möglichst viele Arbeitsschritte der Instandhaltung in einem Arbeitsgang und insbesondere wetterunabhängig anbieten zu können.

Die eingangs genannte Aufgabe der Erfindung wird gelöst durch eine mobile Wartungshalle gemäß Anspruch 1. Eine solche Wartungshalle kann mit dem wenigstens einen Holm an einem Kletterroboter befestigt werden und in die Höhe getragen werden, so dass Wartungsarbeiten in der Halle möglich sind, die ansonsten nur in stationären Hallen durchgeführt werden könnten. Hierbei schirmt die wenigstens eine Hallenschale Wind- und Wettereinflüsse ab.

Beispielsweise bei Windkraftanlagen kann die wenigstens eine Hallenschale durch ihre Verfahrbarkeit an ein Rotorblatt herangefahren werden. Z.B. kann die Hallenschale solche Ausmaße haben, dass die Fläche des Rotorblattes die Hallenschale schließt. Besonders gut ist dies möglich, wenn die wenigstens eine Hallenschale in drei zueinander senkrechten Richtungen verfahrbar an dem wenigstens einen Tragholm befestigt ist.

Die wenigstens eine Hallenschale kann bevorzugt so weitergebildet werden, dass sie in zwei in vertikaler Richtung einander gegenüberliegenden Randbereichen ausgespart ist. Ein vertikal hängendes Windrad-Rotorblatt kann in diesen Aussparungen besonders gut aufgenommen werden, denn die Hallenschale an das Rotorblatt herangefahren wird. Eine solche Aussparung kann in ihrer Kontur in Aufsicht von oben / unten an die aerodynamische Profilierung eines Rotorblatte angepasst sein.

Unabhängig von der vorgenannten Ausführung, aber auch kombinierbar mit dieser kann in den Randbereichen der Aussparung wenigstens ein Dichtelement angeordnet sein, dass sich dichtend an die Kontur eines Wartungsgegenstandes, z.B. eines Windrad-Rotorblattes anlegen kann. Um dies zu erleichtern, kann das wenigstens eine Dichtelement z.B. verschiebbar gelagert sein, z.B. an teleskopierbaren Antrieben. Das Dichtelement kann so gegen die Kontur geschoben werden. Es kann auch vorgesehen sein, dass ein Dichtelement aufpumpbar ist. Z.B. kann es dafür als mit einem Fluid aufpumpbares Hohlform-Element, insbesondere Schlauchelement ausgebildet sein. Durch ein Aufpumpen kann sich dieses formschlüssig an eine Windrad-Rotorblattkontur oder auch an die Kontur eines anderen Wartungsgegenstandes anpassen und die Halle gegen Wetter- und Windeinflüsse dichten. Es kann auch vorgesehen sein, die Verschiebbarkeit und die Aufpumpbarkeit miteinander zu kombinieren.

Eine bevorzugte Ausbildung der mobilen Wartungshalle, die mit allen vorhergenannten Ausführungen kombinierbar ist, kann vorsehen, dass sie zwei, insbesondere formidentische Hallenschalen aufweist, die einander in horizontaler Richtung mit aufeinander zuweisenden Öffnungen gegenüberliegen, wobei wenigstens eine der Hallenschalen, bevorzugt beide Hallenschalen in wenigstens zwei Richtungen beweglich an wenigstens einem Tragholm befestigt ist/sind.

Die zwei Hallenschalen können sich so durch ein Aneinander-Heranfahren zu einer gesamten Halle ergänzen, welche einen Wartungsgegenstand umschließt oder z.B. bei einem Windradrotorblatt von diesem in vertikaler Richtung durchdrungen ist. Bei einer solchen Ausführung kann die Öffnung einer Hallenschale auch größer sein als ein Windradrotorblatt, da die Hallenschale nicht zwingend bereits durch das Rotorblatt geschlossen werden muss, sondern dieses wetterdichte Schließen auch erst durch die zweite Hallenschale erfolgen kann. Auch hier können die Aussparungen beider Hallenschalen und somit der zwischen den Hallenschalen und dem umschlossenen Rotor verbleibenden Querschnitt durch aufpumpbare Hohlformelemente geschlossen werden.

In wenigstens einer der Hallenschalen kann ein mehrachsig verfahrbarer Roboterarm angeordnet sein, um Wartungsarbeiten oder Untersuchungen durchzuführen. Ein solcher Roboterarm kann mittels eines Schienensystems, das sich am Innenumfang der wenigstens einen Hallenschale befindet, an der Oberfläche des Wartungsgegenstandes, insbesondere eines Windrad-Rotorblattes entlangführbar sein. Schienensysteme, die an beiden Hallenschalen innen angeordnet sind, können durch das Aneinander-heranfahren der Schalen aneinander gekoppelt werden, so dass ein Roboterarm oder auch eine sonstige auf dem Schienensystem geführte Wartungseinrichtung von der einen in die andere Hallenschale überführt werden kann.

Ausführungsformen der Erfindung werden nachfolgend anhand von Figuren beschrieben. Es zeigen:
- Figur 1:: eine Windkraftanlage mit einem erfindungsgemäßen Kletterroboter und einer daran befestigten erfindungsgemäßen mobilen Wartungshalle
- Figur 2:: den Kletterroboter mit Wartungshalle in Aufsicht auf die Mast-/Turmseite
- Figuren 3:: mehrere Ansichten des Kletterroboters mit Wartungshalle
- Figur 4:: den Linearantrieb der Tragvorrichtungen
- Figuren 5:: eine Spannvorrichtung eines von zwei Tragelementen der einen Tragvorrichtung
- Figuren 6:: die Spannvorrichtungen der anderen Tragvorrichtung
- Figur 7:: einen Antrieb einer Spannvorrichtung
- Figur 8:: die Anlageelemente einer Tragvorrichtung
- Figur 9:: einen an Bandelementen anbringbaren Rollwagen

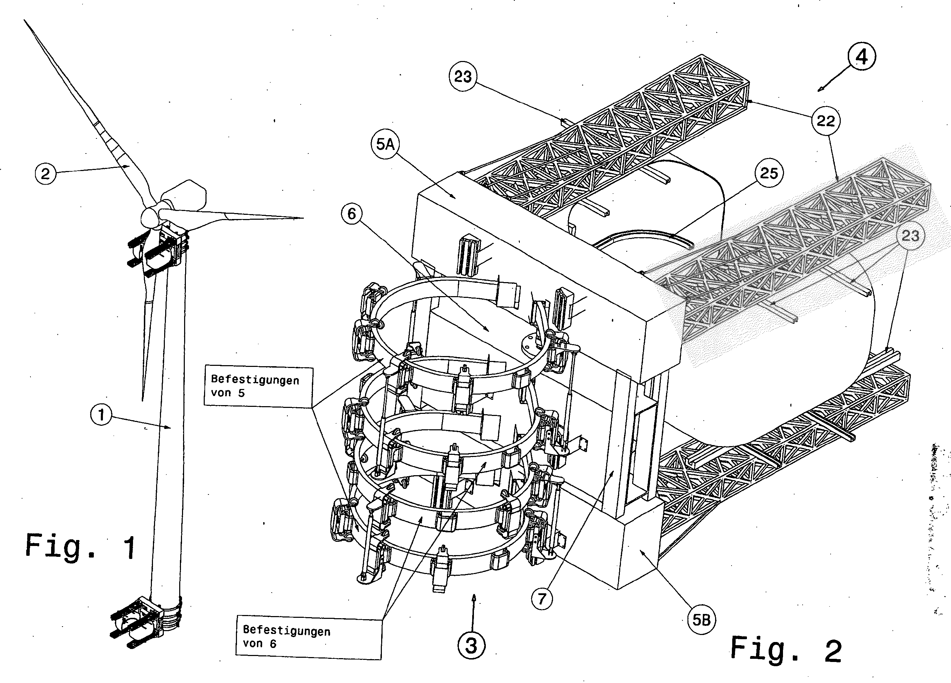

Die Figur 1 zeigt in einer Übersicht die mögliche Anwendung eines erfindungsgemäßen Kletterroboters und einer erfindungsgemäßen, daran befestigten Wartungshalle bei einer Windkraftanlage mit einem Mast 1 bzw. Turm 1, an dem der Kletterroboter schreiten, d.h. nicht-kontinuierlich herauf- oder herabklettern kann, z.B. um Wartungsarbeiten an einem Rotorblatt 2 vornehmen zu können.

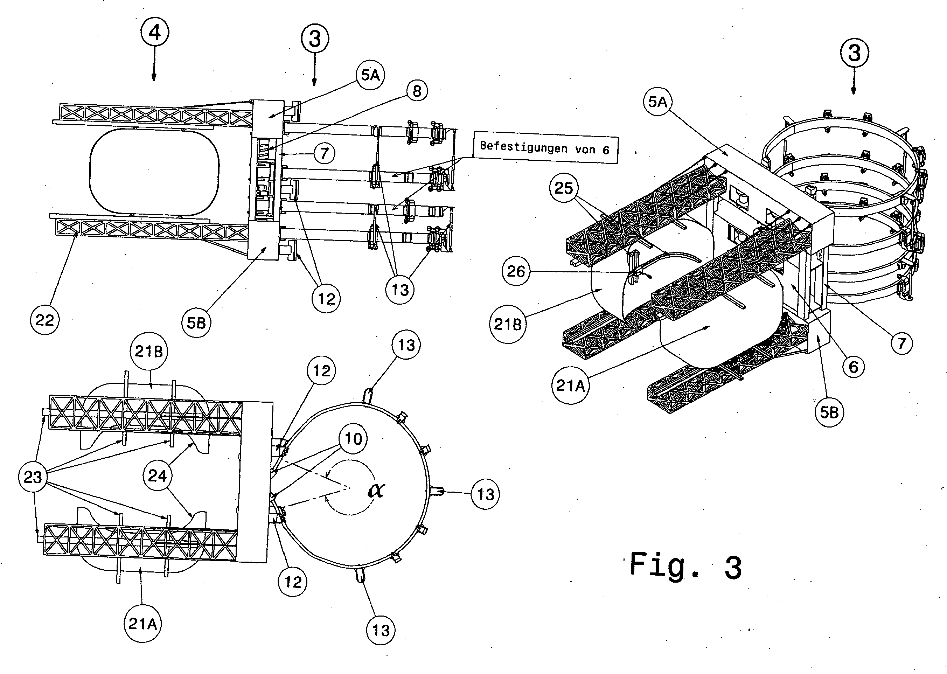

Die Figuren 2 und 3 zeigen den Kletterroboter 3 und die Wartungshalle 4 in detaillierterer Darstellung.

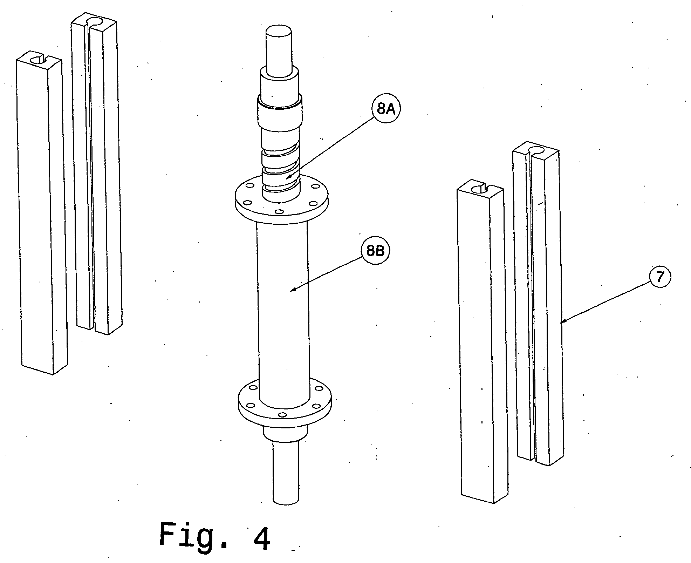

Der Kletterroboter 3 umfasst eine erste Tragvorrichtungen 5 und eine zweite Tragvorrichtung 6. Die erste Tragvorrichtung 5 ist unterteilt in zwei Tragelemente 5A und 5B die in vertikaler Richtung beabstandet und durch Führungsschienen 7 verbunden sind, an denen die Tragvorrichtung 6 geführt ist, die zwischen den Tragelementen 5A und 5B mit einem Linearantrieb 8 auf- und abbewegt werden kann. Dieser Linearantrieb 8 ist in Figur 4 detaillierter dargestellt und umfasst eine Spindel 8A, die durch einen Motor gedreht werden kann die beidseits an der Tragvorrichtung 5 befestigt ist. Die Spindel trägt eine Mutter 8B, die mit der Tragvorrichtung 6 verbunden ist. Durch motorische Spindeldrehung wird die Mutter und Tragvorrichtung 6 verschoben zwischen zwei Endstellungen. Dabei ist die Tragvorrichtung 6 in oder an den vertikalen Schienen 7 geführt, die die beiden Tragelemente der Tragvorrichtung 5 an den äußeren Kanten verbinden.

Die Tragvorrichtung 5 umfasst zwei Spannvorrichtungen aus mehreren Bauelementen, wobei eine Spannvorrichtung an dem oberen Tragelement 5A und eine an dem unteren Tragelement 5B angeordnet ist. Die Tragvorrichtung 6 hat ebenso zwei Spannvorrichtungen.

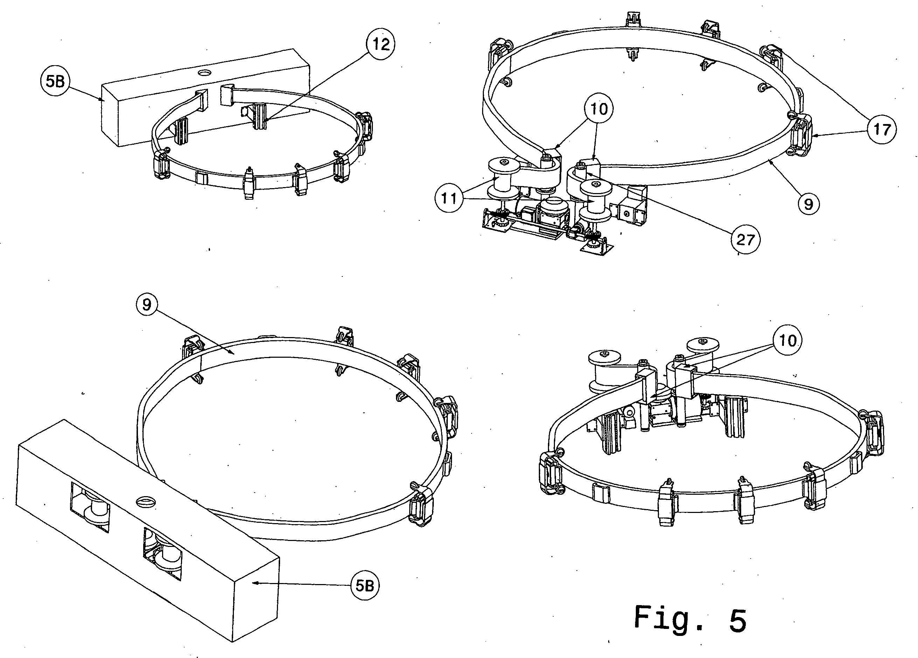

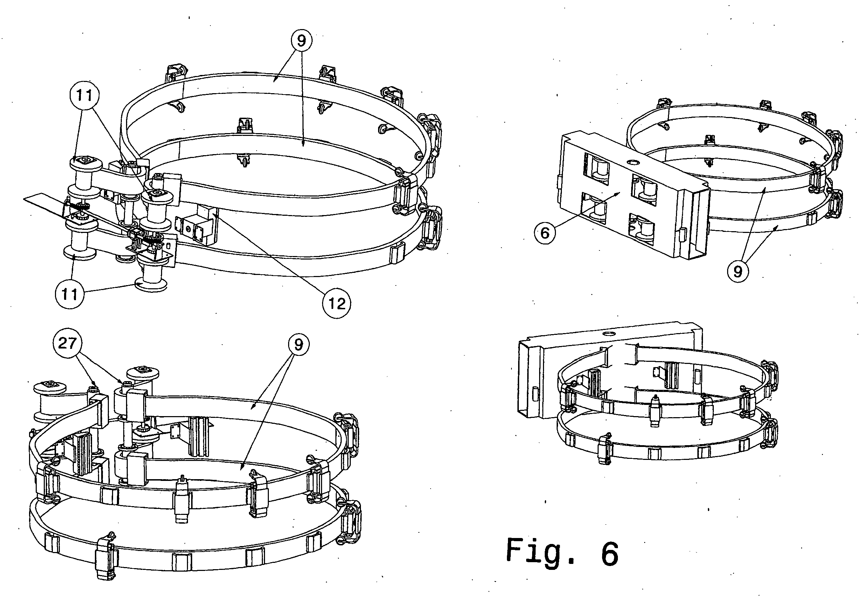

Gemäß den Figuren 5 und 6 umfasst jede Spannvorrichtung ein Bandelement 9. Jedes Bandelement kann - wie Figur 1 zeigt - um den äußeren Umfang eines Mastes 1 herumgelegt werden und liegt zumindest im verspannten Zustand an diesem an. Um das Erzeugen der Spannung sowie das Lösen der Spannung zu bewirken werden die Bandenden jedes Bandelementes 9 durch Ausnehmungen und darin angeordnete Gleithülsen 10 in das Innere einer Tragvorrichtung 5/6 geführt und dort jedes Ende auf einer eigenen Wickelrolle 11 auf- oder abgewickelt.

Örtlich zwischen einer Gleithülse 10 und einer Wickelrolle 11 wird das Bandelement 9 in seiner Richtung mittels einer Umlenkrolle 27 umgelenkt. Die Umlenkrollen haben einem geringeren Abstand als die Wickelrollen. Trotz der groß bauenden Wickelrollen 11 und der für deren Antrieb nötigen Bauteile kann so erreicht werden, dass ein Bandelement über einen Winkel α > 300 Grad am Umfang eines Mastes 1 anliegt, wie es Figur 3 visualisiert. Hierdurch wird eine besonders große Kraftübertragungsfläche erzielt.

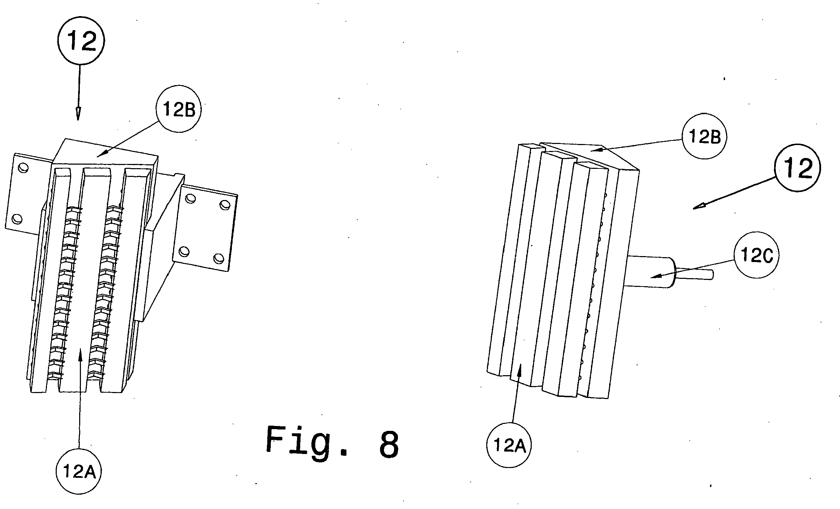

Die Tragvorrichtungen haben ihrerseits jeweils Anlageelemente 12, die in Figur 8 gezeigt sind und deren Flächen 12A sich hier tangetial an die Oberfläche eines Mastes / Turm anlegen können. Prismenförmige Körper 12B weisen auf einer ihrer Prismenflächen die Anlagefläche 12A oder Anlageflächen 12A auf und sind hier durch einen Antrieb von der Tragvorrichtung 5/6 in Richtung zum Mast schiebbar oder von diesem wegziehbar. Hierfür können Schubstangen 12C verwendet werden, an denen ein Antrieb ankoppelt.

Die Bewegung des Kletterroboters erfolgt derart, dass eine der Tragvorrichtungen 5/6 am Mast / Turm 1 verspannt wird durch Ausfahren der Anlageelemente in Richtung zum Mast und Aufwickeln der Bandelemente 9 dieser Tragvorrichtung, wodurch der vom Bandelement 9 umschlossene Querschnitt verkleinert und so ein Mast fest umschlossen wird. Nach der Verspannung wird die andere Tragvorrichtung gelöst durch Abwickeln des Bandes von den Wickelrollen 11 und Einziehen der Anlageelemente 12.

Mit dem Linearantrieb 8 wird die gelöste Tragvorrichtung relativ zur festen Tragvorrichtung linear in vertikaler Richtung nach oben oder unten verschoben. Dabei werden synchron zur Bewegungsweite der Tragvorrichtungen zueinander zusätzlich Linearantriebe 13 ein- oder ausgefahren, welche die Bandelemente 9 verschiedener Tragvorrichtungen verbinden. Hierdurch werden die losen Bandelemente 9 gegen die Schwerkraft in horizontaler Lage gehalten und mitbewegt. Die Linearantriebe 13 sind bevorzugt nur in der von den Tragvorrichtungen 5/6 abgewandter Querschnittshälften angeordnet.

Die verschobene Tragvorrichtung wird sodann verspannt und die zuvor verspannte gelöst und in gleicher Weise nachgeführt.

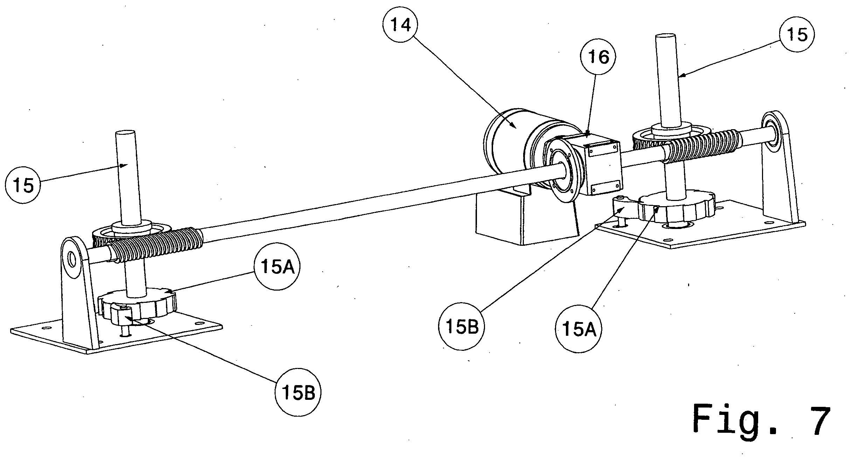

Die Figur 7 zeigt eine mögliche Mechanik eines Antriebs der Wickelrollen 11. Mit einem Motor 14 werden über ein Getriebe zwei Wickelwellen 15 gleichzeitig angetrieben oder durch eine Kupplung 16 nur eine der Wickelwellen 15 an den Motor angekoppelt. Die Wickelwellen können einen Rastmechanismus 15A aufweisen, der nur in einer Drehrichtung freilaufend ist, nämlich derjenigen, die eine Verspannung eines Bandelementes 9 bewirkt. Für ein Lösen kann es vorgesehen sein, dass ein Rastelement 15B, welches die umgekehrte Drehung der Welle 15 blockiert, mittels eines Aktors (hier nicht gezeigt) außer Eingriff gebracht wird. So wird sichergestellt, dass bei einem Stromausfall eine bestehende Verspannung sich nicht löst.

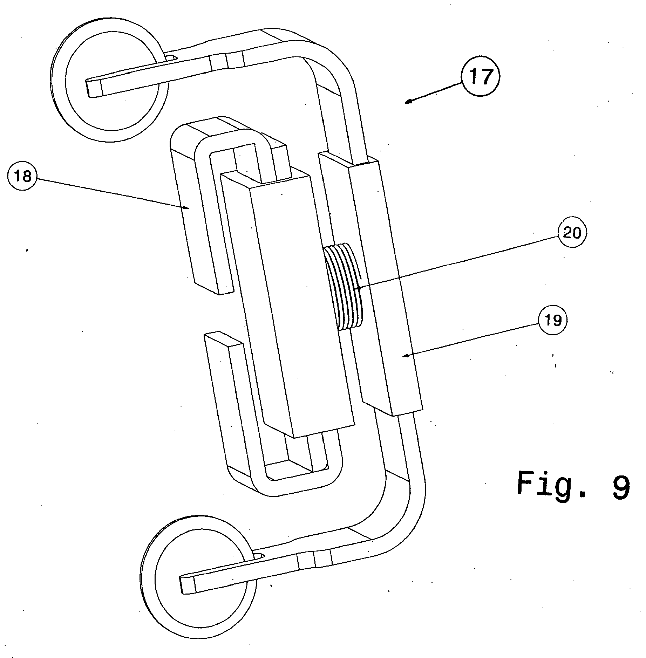

Figur 9 zeigt einen Rollwagen 17, der in mehrfacher gleicher Ausführung am Bandelement 9 über den Umfang des Mastes verteilt angebracht ist. In einer hier geschlitzten Haltehülse 18 ist ein Bereich des Bandelementes 9 aufgenommen und die Hülse 18, somit auch das Bandelement 9 über eine Zugfeder 20 an einer Brückenelement 19 befestigt, dass das Bandelement 9 vertikal überbrückt, wobei deren Enden Rollen aufweisen, die auf der Oberfläche des Mastes/ Turmes rollen, wenn eine Tragvorrichtung mit dem gelösten Bandelement 9 bewegt wird.

Bei Lösen und der nachlassenden Spannung im Bandelement 9 wird diese durch die ziehende Feder 20 von der Mastoberfläche abgezogen, so dass das Bandelement nur rollend weiterbewegt wird. Wird hingegen die Spannung durch Aufwickeln des Bandelementes mit den Wickelrollen 11 vergrößert, so wird das Bandelement gegen die Feder 20 auf die Manteloberfläche des Mastes / Turmes gezogen und liegt dort fest an, wobei die Feder 20 maximal gespannt ist für den nächsten Abziehvorgang.

Die in den Figuren 2 und 3 gezeigte Wartungshalle umfasst zwei Hallenschalen 21A und 21B, deren Öffnungen aufeinander zuweisen. Jede Hallenschale ist in dieser Ausführung an zwei hier beispielsweise horizontalen Tragholmen 22 befestigt und in zwei zueinander senkrechten Richtungen in Führungsschienen 23 bewegbar. Die Tragholme sind an den äußeren Eckbereichen der Tragelemente 5A und 5B befestigt. Diese Tragelemente 5A, 5B, die durch Führungsschienen 7 zu einer einheitlichen Tragvorrichtung 5 verbunden sind können somit eine Montageplattform ausbilden, z.B. für die hier gezeigten Tragholme der Wartungshalle.

Es kann hier die Höhe der Schalen mit dem Kletterroboter eingestellt werden, wobei der Abstand zum Mast und der Abstand der Schalen 21A/B zueinander bzw. zu einem Rotorblatt 2 durch Bewegung der Schalen 21A/B in den Schienen 23 möglich ist.

Die Schalen 21A/B haben in vertikaler Richtung gegenüberliegende Aussparungen 24 im Randbereich mit denen der Querschnitt eines vertikal hängenden Rotorblattes umschossen werden kann, wenn die Schalen aufeinander zu gefahren werden. Der verbleibende Restquerschnitt kann ggfs. geschlossen werden durch Aufpumpen von Hohlformen im Randbereich der Aussparungen 24. Im Inneren der Schalen 21A/B sind Schienen 25 angeordnet, mit denen eine Wartungseinrichtung 26 relativ zum Wartungsgegenstand, hier einem Rotorblatt 2 verfahren werden kann.

Es kann vorgesehen sein, dass mit den Antrieben, mit denen die Schalen in den Schienen 23 bewegt werden können, automatisch die Lage der Hallenschalen stabilisiert wird, z.B. um bei Windlast Rotorbewegungen zu kompensieren. Hierfür können die Bewegung der Hallenschalen erfassende Meßwertaufnehmer vorgesehen sein, anhand deren Signal die Antriebe angesteuert werden.

## Patentansprüche

1. Mobile Wartungshalle mit wenigstens einem Tragholm (22), der an einem Kletterroboter für Masten/Türme (1) befestigbar ist und die wenigstens eine Hallenschale (21A, 21B) aufweist, die an dem wenigstens einen Tragholm (22) in wenigstens einer Richtung verfahrbar befestigt ist, **dadurch gekennzeichnet, dass** in der wenigstens einen Hallenschale (21A, 21B) eine mehrachsig verfahrbare Wartungseinrichtung (26) angeordnet ist, die mittels eines Schienensystems (25), das sich am Innenumfang der wenigstens einen Hallenschale (21A, 21B) befindet, an der Oberfläche des Wartungsgegenstandes, insbesondere eines Windrad-Rotorblattes (2) entlangführbar ist.

2. Wartungshalle nach Anspruch 1, **dadurch gekennzeichnet, dass** die wenigstens eine Hallenschale (21A, 21B) in zwei in vertikaler Richtung einander gegenüberliegenden Randbereichen (24) ausgespart ist, insbesondere zur Aufnahme eines vertikal hängenden Windrad-Rotorblattes (2).

3. Wartungshalle nach Anspruch 2, **dadurch gekennzeichnet, dass** in den Randbereichen (24) verschiebbare und/oder mit einem Fluid aufpumpbare Dicht-Elemente, insbesondere Schlauchelemente, angeordnet sind, insbesondere die sich beim Verschieben und/oder Aufpumpen formschlüssig an eine Kontur eines Wartungsgegenstandes, insbesondere eines Windrad-Rotorblattes (2) anpassen.

4. Wartungshalle nach einem der vorherigen Ansprüchen, **dadurch gekennzeichnet, dass** sie zwei, insbesondere formidentische Hallenschalen (21A, 21B) aufweist, die einander in horizontaler Richtung mit aufeinander zuweisenden Öffnungen gegenüberliegen, wobei wenigstens eine der Hallenschalen (21A, 21B), bevorzugt beide Hallenschalen (21A, 21B) in wenigstens zwei Richtungen beweglich an wenigstens einem Tragholm (22) befestigt ist/sind.

5. Wartungshalle nach einem der vorherigen Ansprüchen, **dadurch gekennzeichnet, dass** die Wartungseinrichtung eine Messvorrichtung und/oder ein Roboterarm umfasst,

6. Wartungshalle nach einem der vorherigen Ansprüchen, **dadurch gekennzeichnet, dass** die wenigstens eine Hallenschale (21A, 21B) an dem wenigstens einen Tragholm (22) in wenigstens zwei, bevorzugt zueinander senkrechten Richtungen verfahrbar befestigt ist.

7. Wartungshalle nach Anspruch 4, **dadurch gekennzeichnet, dass** mit den Antrieben, mit denen die Schalen in Schienen bewegbar sind, automatisch die Lage der Hallenschalen stabilisierbar ist, insbesondere zur Kompensation von Rotorbewegungen bei Windlast.

## Claims

1. Mobile maintenance hall comprising at least one load-carrying spar (22) which is fastenable to a climbing robot for masts/towers (1) and which has at least one hall shell (21A, 21B) which is fastened to the at least one load-carrying spar (22) so as to be movable in at least one direction, **characterized in that** a maintenance device (26) which is movable in a multi-axial manner is arranged in the at least one hall shell (21A, 21B) and can be guided along the surface of the object to be maintained, in particular a wind turbine rotor blade (2), by means of a rail system (25) which is located on the inner circumference of the at least one hall shell (21A, 21B).

2. Maintenance hall according to Claim 1, **characterized in that** the at least one hall shell (21A, 21B) is recessed in two edge regions (24) which are opposite each other in the vertical direction, in particular for receiving a vertically hanging wind turbine rotor blade (2).

3. Maintenance hall according to Claim 2, **characterized in that** sealing elements, in particular tubing elements, which are displaceable and/or can be inflated with a fluid are arranged in the edge regions (24), and in particular which, during the displacement and/or inflation, are adapted in a form-fitting manner to a contour of an object to be maintained, in particular a wind turbine rotor blade (2).

4. Maintenance hall according to one of the preceding claims, **characterized in that** it has two, in particular identically shaped hall shells (21A, 21B) which lie opposite each other in the horizontal direction with openings facing each other, wherein at least one of the hall shells (21A, 21B), preferably both hall shells (21A, 21B), is/are fastened to at least one load-carrying spar (22) so as to be movable in at least two directions.

5. Maintenance hall according to one of the preceding claims, **characterized in that** the maintenance device comprises a measurement device and/or a robot arm.

6. Maintenance hall according to one of the preceding claims, **characterized in that** the at least one hall shell (21A, 21B) is fastened to the at least one load-carrying spar (22) so as to be movable in at least two directions which are preferably perpendicular to each other.

7. Maintenance hall according to Claim 4, **characterized in that** the position of the hall shells can be stabilized automatically with the drives, with which the shells are movable in rails, in particular in order to compensate for rotor movements in the event of a wind load.

## Revendications

1. Hall de maintenance mobile avec au moins un longeron porteur (22) qui peut être fixé à un robot grimpeur pour mâts/tours (1), et qui présente au moins une coque de hall (21A, 21B) qui peut être fixée de façon déplaçable dans au moins une direction sur le longeron porteur (22) au moins au nombre de un, **caractérisé en ce que**, dans la coque de hall (21A, 21B) au moins au nombre de un, il est disposé un équipement de maintenance (26) déplaçable dans plusieurs axes qui, au moyen d'un système de rail (25) qui se trouve sur le pourtour intérieur de la coque de hall (21A, 21B) au moins au nombre de un, peut être guidé le long de la surface de l'objet de la maintenance, en particulier d'une paie de rotor d'éolienne (2).

2. Hall de maintenance selon la revendication 1, **caractérisé en ce que** la coque de hall (21A, 21B) au moins au nombre de un est évidée dans deux zones de bord (24) opposées l'une à l'autre dans la direction verticale, en particulier pour la réception d'une pale de rotor d'éolienne (2) qui pend verticalement.

3. Hall de maintenance selon la revendication 2, **caractérisé en ce que** des éléments d'étanchéité, en particulier des éléments de tuyau, coulissants ou pouvant être pompés avec un fluide sont disposés dans les zones de bord (24), en particulier qui s'adaptent, lors du coulissement et/ou du pompage, par liaison de forme à un contour d'un objet de maintenance, en particulier une pale de rotor d'éolienne (2).

4. Hall de maintenance selon l'une des revendications précédentes, **caractérisé en ce qu'**il présente deux coques de hall (21A, 21B), en particulier de forme identique, qui sont opposées l'une à l'autre dans la direction verticale avec des ouvertures dirigées les unes vers les autres, au moins une des coques de hall (21A, 21B), de préférence les deux coques de hall (21A, 21B), étant fixée/fixées dans au moins deux directions de façon mobile sur au moins un longeron porteur (22).

5. Hall de maintenance selon l'une des revendications précédentes, **caractérisé en ce que** l'équipement de maintenance comprend un dispositif de mesure et/ou un bras de robot.

6. Hall de maintenance selon l'une des revendications précédentes, **caractérisé en ce que** la coque de hall (21A, 21B) au moins au nombre de un est fixée de façon déplaçable sur le longeron porteur (22) au moins au nombre de un dans au moins deux directions de préférence perpendiculaires l'une par rapport à l'autre.

7. Hall de maintenance selon la revendication 4, **caractérisé en ce que**, avec les entraînements avec lesquels les coques peuvent être déplacées dans des rails, la position des coques de hall peut être stabilisée automatiquement, en particulier pour compenser des mouvements de rotor en présence d'une charge de vent.
